# EUROPÄISCHE PATENTSCHRIFT

(11) **EP 0 814 320 B1**
(45) Veröffentlichungstag und Bekanntmachung des Hinweises auf die Patenterteilung: **11.09.2002**
(21) Anmeldenummer: 97107273.1
(22) Anmeldetag: 02.05.1997
(51) Int. Cl.: G01C 22/02, G01P 1/12, G07C 5/08, B60R 16/02, G06M 3/12

(54) **Verfahren zum Ändern eines elektronischen Speichers für nutzungsbezogene Daten eines Fahrzeugs**
Method for changing an electronic memory for usage-related data of a vehicle
Méthode pour changer une mémoire électronique pour données d'utilisation d'un véhicule

(30) Priorität: 17.06.1996 DE 19624041
(43) Veröffentlichungstag der Anmeldung: 29.12.1997
(73) Patentinhaber: Bayerische Motoren Werke Aktiengesellschaft, 80788 München (DE)
(72) Erfinder: Giegold, Jürgen, 80807 München (DE)

(56) Entgegenhaltungen:
- WO-A-96/10807
- PATENT ABSTRACTS OF JAPAN vol. 006, no. 252 (P-161), 10. Dezember 1982 & JP 57 148211 A (NISSAN JIDOSHA KK), 13. September 1982
- PATENT ABSTRACTS OF JAPAN vol. 008, no. 038 (P-255), 18. Februar 1984 & JP 58 191921 A (NIPPON DENSO KK), 9. November 1983

## Beschreibung

Die Erfindung bezieht sich auf ein Verfahren zum Ändern eines elektronischen Speichers für untzungsbezogene Daten eines Fahrzeugs.

Bei modernen Fahrzeugen werden in einem datenerhaltenden Schreib- und Lesespeicher nicht nur die für die Fahrzeug- und die Ländervarianten notwendigen Parameter gespeichert, sondern auch urkundliche Daten, wie gefahrene Gesamtwegstrecke sowie Servicedaten. Diese Daten werden durch besondere, aufwendige Methoden wie redundantes Ablegen der Daten auch in anderen Steuergeräten sowie durch Verschlüsselung und einen Software-Schreibschutz möglichst unzugänglich gemacht, so daß eine Manipulation dieser Daten erschwert wird.

Der notwendige technische Aufwand für eine Manipulation an diesem Speicher ist gegenüber einer Veränderung des früher gebräuchlichen Gesamtwegstreckenzählers, im folgenden GWSZ genannt, mit mechanischem Rollenzählwerk zwar gestiegen. Jedoch haben alle genannten konventionellen Maßnahmen eine Manipulation am Inhalt des GWSZ und an anderen urkundlichen Daten nicht verhindern können.

JP-A-57148211 zeigt eine Filteranordnung, mit der die Manipulation des Kilometerstandes in einem Fahrzeug verhindert werden soll. Das Filter blockiert die Weiterleitung von Signalen, deren Frequenz höher ist als die vom Geschwindigkeitssensor bei Maximalgeschwindigkeit bereitgestellte Signalfrequenz.

JP-A-58191921 zeigt eine Anordnung, bei der die Zeit zwischen zwei vom Geschwindigkkeitssensor abgegebenen Pulsen überprüft wird. Ist die Zeit kürzer als diejenige, die der Maximalgeschwindigkeit des Fahrzeugs entspricht, so werden die Pulse ignoriert.

WO-A-96/10807 zeigt eine Anordnung, die erkennt, dass ein Fahrzeug zwar benutzt wird, die Spannungszufuhr zu einem Datenregistiersystem jedoch unterbrochen ist.

Der Erfindung liegt die Aufgabe zugrunde ein Verfahren der eingangs genannten Art zu schaffen, das eine erhöhte Sicherheit gegenüber einer Manipulation des Speichers bietet.

Die Erfindung löst diese Aufgabe durch die Merkmale des Patentanspruchs 1.

Der Vergleicher ist nunmehr Teil einer Logikeinheit, die die neuen und die alten Daten miteinander vergleicht und nur dann, wenn der Unterschied der beiden definierten Plausibilitätskriterien genügt, eine Überschreibung des Speichers mit den neuen Daten ermöglicht.

Handelt es sich beispielsweise bei den urkundlichen Daten um die Gesamtbetriebszeit des Fahrzeugs, so können die neuen Daten nur dann übernommen werden, wenn sie einer längeren Gesamtbetriebszeit entsprechen. Aber nicht nur die Art, hier die Vergrößerung der Gesamtbetriebszeit, ist im Rahmen der vorliegenden Erfindung, sondern auch der Umfang, um den die Daten geändert sind. Die Änderung muß plausibel sein. Es wird dadurch verhindert, daß versehentlich eine Änderung der Daten vorgenommen wird, die den tatsächlichen Verhältnissen nicht entspricht. Eine ungewollte Verdoppelung der Gesamtbetriebszeit kann dadurch beispielsweise ausgeschlossen werden.

Im Falle des GWSZ stellt sich die Erfindung in folgender Weise dar:

Die neuen Daten werden nur dann übernommen und dazu verwendet, die alten Daten zu überschreiben, wenn die neuen Daten einer vergrößerten Laufleistung des Fahrzeugs entsprechen und wenn sie sich gegenüber den alten Daten um einen vorgegebenen Wert unterscheiden. Dieser Wert kann als obere Grenze verwendet werden und beispielsweise einer Änderung der Laufstrecke um zwei km entsprechen.

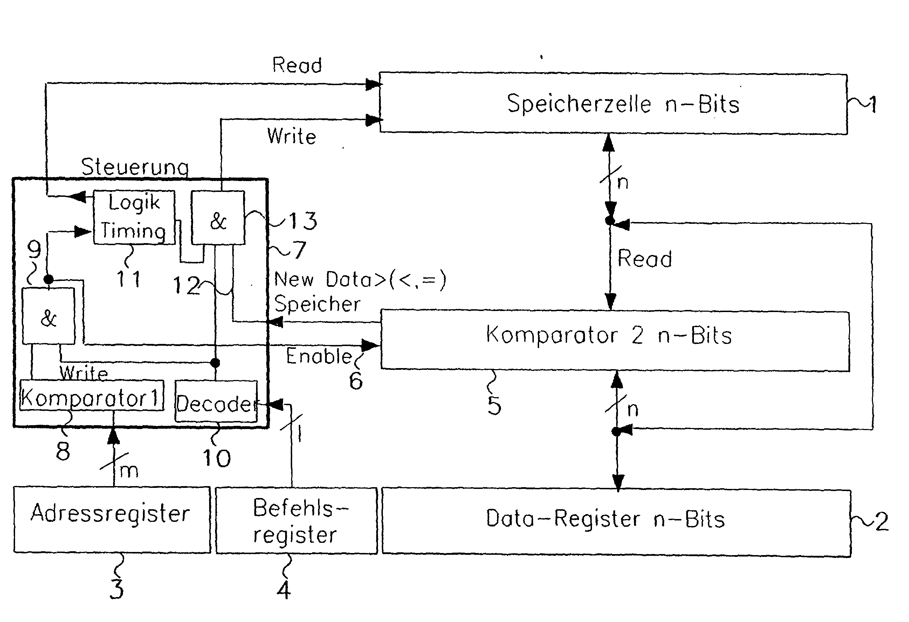

Anhand der Zeichnung ist die Erfindung weiter erläutert Die einzige Figur zeigt ein Blockschaltbild für eine Schaltung zur Durchführung des erfindungsgemäßen Verfahrens.

Im Steuergerät eines Fahrzeugs soll die Gesamtwegstrecke, vulgo der Kilometerstand gespeichert und bei einer Veränderung geändert werden. Hierzu ist ein Speicher 1 als n-BIT Speicherzelle mit z. B. n=24 ausgebildet. Der Inhalt des Speichers 1 entspricht der bisherigen Laufleistung des Fahrzeugs.

Wird die Laufleistung nunmehr vergrößert, so wird von einem nicht dargestellten Mirkroprozessor nunmehr ein Datum geliefert, das dem neuen Kilometerstand entpricht. Dieses Datum wird in ein Data-Register 2 eingegeben. Gleichzeitig wird in einem Adressregister 3 die Adresse des Speichers 1 sowie in einem Befehlsregister 4 ein Write-Befehl eingegeben. Bevor nun der Schreibbefehl zur Ausführung gelangt, werden die im Zwischenspeicher 2 vorhandenen neuen Daten mit den im Speicher 1 vorhandenen alten Daten verglichen. Hierzu dient ein Komparator 5, der den Inhalt der Speicher 1 und 2 ausliest. Dies erfolgt aufgrund eines entsprechenden Befehls über eine Steuerleitung 6, die den Komparator 5 mit einer Steuerund Logikeinheit 7 verbindet. In Einheit 7 befindet sich ein weiterer Komparator 8, der die im Adressregister 3 anstehende Adresse des Speichers 1 aufnimmt und mit vorgegebenen Adressen vergleicht. Diese vorgegebenen Adressen sind die Adressen von Speichern, in denen urkundliche Daten des Fahrzeugs, hier der Kilometerstand und damit die Adresse des Speichers 1, enthalten sind. Komparator 8 liefert über ein UND-Glied 9 den Steuerbefehl zum Komparator 5. Am UND-Glied 9 ist der Ausgang eines Decoders 10 angeschlossen, der den Write-Befehl vom Befehlsregister 4 aufnimmt und decodiert.

Gleichzeitig mit dem Steuerbefehl für den Komparator 5 stößt das UND-Glied 9 ein Zeitglied 10 an, das einen Read-Befehl zum Speicher 1 sendet. Dieser liefert seinen Inhalt an den Komparator 5.

Ergibt sich beim Vergleich der alten und der neuen Daten im Komparator 5, daß die neuen Daten plausibel sind, d.h. sich gegenüber den alten Daten aufgrund einer maximalen Vergrößerung der Laufleistung um beispielsweise 2 km unterscheiden, aber die neuen Daten zumindest größer sind, liefert der Komparator 5 über eine Leitung 12 ein Signal zu einem UND-Glied 13, das mit dem Ausgang des Zeitglieds 11 und des Decoders 10 verbunden ist. Der Ausgang des UND-Glieds 13 ist mit dem Write-Eingang 14 des Speichers 1 verbunden. Der Speicher 1 übernimmt nunmehr die neuen Daten. Die neue Gesamtlaufleistung ist damit gespeichert. Soll nun der Inhalt des Speichers 1 in einer nicht plausiblen Weise verändert werden, beispielsweise durch einen Inhalt ersetzt werden, der einer kleineren Laufleistung entspricht, so ist der Ablauf übereinstimmend bis hin zu dem Zeitpunkt, bei dem im vorher beschriebenen Fall ein Signal über die Leitung 12 vom Komparator 5 an das UND-Glied 13 ausgegeben wird. Ist die Änderung nicht plausibel, d.h. entspricht sie nicht einer Vergrößerung der Laufleistung um einen begrenzten Wert, so wird das Signal auf die Leitung 12 nicht ausgegeben. Dadurch liefert auch das UND-Glied 13 keinen Schreibbefehl an den Write-Eingang 14 des Speichers 1. Die neuen (zunächst im Zwischenspeicher 2 anstehenden Daten) werden nunmehr nicht in den Speicher 1 übernommen. Der Inhalt des Speichers 1 bleibt unverändert.

Damit ist eine hohe Sicherheit vor einer wenn auch unbeabsichtigten Manipulation des Speichers 1 und damit von urkundlichen Daten des Fahrzeugs gewährleistet.

## Patentansprüche

1. Verfahren zum Ändern eines elektronischen Speichers für nutzungsbezogene Daten eines Fahrzeugs,
**dadurch gekennzeichnet,**
**daß** einem Vergleicher die geänderten neuen Daten und die im Speicher erhaltenen alten Daten zugeführt werden und daß der Vergleicher die Übernahme der neuen Daten in den Speicher nur dann erlaubt, wenn die neuen Daten gegenüber den alten Daten in einer nutzungskonformen Art und Weise geändert sind.

2. Verfahren nach Anspruch 1,
**dadurch gekennzeichnet,**
**daß** die auf die Laufleistung des Fahrzeugs bezogenen alten Daten nur dann aktualisiert werden, wenn die neuen Daten sich von den alten Daten um maximal einen vorgegebenen Differenzwert unterscheiden.

3. Verfahren nach Anspruch 1 oder 2,
**dadurch gekennzeichnet,**
**daß** die auf die Laufleistung des Fahrzeugs bezogenen alten Daten nur dann aktualisiert werden, wenn die neuen Daten einer gegenüber den alten Daten größeren Laufleistung entsprechen.

## Claims

1. A method of modifying an electronic memory for data relating to use of a vehicle, **characterised in that** a comparator is supplied with the modified new data and the old data contained in the memory, and the comparator allows the new data to be transferred to the memory only if the new data, relative to the old data, have been modified in a manner which conforms with usage.

2. A method according to claim 1, **characterised in that** the old data relating to the distance run by the vehicle are updated only if the new data differ from the old data by not more than a preset value.

3. A method according to claim 1 or claim 2, **characterised in that** the old data relating to the distance run by the vehicle are updated only if the new data correspond to a longer distance run than the old data.

## Revendications

1. Procédé pour modifier une mémoire électronique contenant des données d'utilisation d'un véhicule,
**caractérisé en ce que**
on applique à un comparateur les nouvelles données modifiées et les anciennes données contenues dans la mémoire et le comparateur n'autorise le transfert des nouvelles données dans la mémoire que si ces nouvelles données ont été modifiées d'une manière conforme à l'utilisation par rapport aux anciennes données.

2. Procédé selon la revendication 1,
**caractérisé en ce que**
les anciennes données concernant le parcours du véhicule ne seront actualisées que si les nouvelles données diffèrent des anciennes données d'une valeur de différence maximale prédéterminée.

3. Procédé selon les revendications 1 ou 2,
**caractérisé en ce que**
l'on n'actualise les anciennes données concernant le parcours du véhicule que si les nouvelles données correspondent à un parcours plus grand par rapport aux anciennes.
